(19) Europäisches Patentamt
European Patent Office
Office européen des brevets

(11) Veröffentlichungsnummer: **0 304 030 A2**

# (12) EUROPÄISCHE PATENTANMELDUNG

(21) Anmeldenummer: 88113338.3

(22) Anmeldetag: 17.08.88

(51) Int. Cl.[4]: C08L 53/00 , C08K 5/01 , C08K 3/22 , C08K 3/32 , C08K 5/34

(30) Priorität: 17.08.87 DE 3727352

(43) Veröffentlichungstag der Anmeldung: 22.02.89 Patentblatt 89/08

(84) Benannte Vertragsstaaten: AT BE CH ES FR GB IT LI LU NL SE

(71) Anmelder: AM-Produkte AG
Pilatusstrasse 64 "Zähringerhof"
CH-6002 Luzern(CH)

(72) Erfinder: Schäfer, Grete
Beckedorfer Strasse 142
2105 Seevetal 1(CH)
Erfinder: Schäfer, Helmut
Beckedorfer Strasse 142
2105 Seevetal 1(CH)
Erfinder: Schäfer, Uwe
Landwehr 1
2121 Deppenstedt(CH)

(74) Vertreter: Siewers, Gescha, Dr.
Rechtsanwälte Dr. Harmsen, Dr. Utescher
Dipl.-Chem. Harmsen, Bartholatus Dr.
Schaeffer, Dr. Fricke, Wolter Patentanwalt Dr.
Siewers Adenauerallee 28
D-2000 Hamburg 1(DE)

## (54) Selbstverlöschend ausgerüstete Thermoplaste.

(57) Die Erfindung betrifft selbstverlöschend ausgerüstete Thermoplaste, die gekennzeichnet sind durch einen Gehalt an einer Matrix aus einem Styrolblockcopolymeren oder Styrol-Ethylen- Blockcopolymeren und, bezogen auf diese, und jeweils in Gewichtsprozent, 20 - 100% Weichmacheröle, 1 - 50% Polyolefine hoher Dichte und 10 - 200% Aluminium- oder Magnesiumhydroxid und 10-150% eines Gemisches aus 5 - 60% Ammoniumpolyphosphat, 1 - 25% Melamincyanurat und 1 - 25% eines polymeren Hydroxyalkylderivates der Isocyanursäure.

EP 0 304 030 A2

## Selbstverlöschend ausgerüstete Thermoplaste

Die Erfindung betrifft flammhemmend bzw. selbstverlöschend ausgerüstete Thermoplaste.

Durch den Einsatz immer größerer Mengen thermoplastischer Kunststoffe in allen Bereichen hat auch das Bewußtsein des erforderlichen Brandschutzes ständig zugenommen, und dies trifft insbesondere für das Bauwesen, für Anlagen der Elektrotechnik und Elektronik zu. Die Verwendung flammhemmender und selbstlöschender Kunststoffe ist im Laufe der letzten Jahre von steigender Bedeutung geworden. Die Hauptanwendungsgebiete für flammhemmende, flammgeschützte und selbstverlöschende Thermoplaste befinden sich heute im Bereich der starren oder hartsteifen Werkstoffe. Der Einsatz von elastischen Werkstoffen in flammhemmender oder selbstverlöschender Ausrüstung ist bis heute auf wenige spezielle Einsatzgebiete beschränkt.

Mit Ausnahme von Fluorkunststoff,Pheno- und Aminoplast sowie halogenhaltigen und Siliconkautschuken sind die meisten Kunststoffe brennbar, wobei der Brennvorgang im wesentlichen zwei Phasen einschließt, nämlich die Erhitzung des Kunststoffes bis zu Abspaltung flüchtiger Pyrolyseprodukte und die Entzündung der Pyrolyseprodukte und gegebenenfalls selbstständiges Weiterbrennen. Flammhemmende Zusätze können in beiden Phasen eingreifen, indem entweder der Verlauf der Pyrolyse durch Bildung schwerer entflammbarer Produkte oder einer als Schutzschicht wirkenden Kohleschicht beeinflußt wird oder dadurch, daß das Flammschutzmittel gasförmige Produkte liefert, welche den Brennvorgang entweder durch Sauerstoffverdrängung ersticken oder durch Eingriff in die radikalische Kettenreaktion inhibieren. Eine einheitliche Erklärung der Flammschutzwirkung ist aber bis heute noch nicht möglich, auch wenn verschiedene Substanzklassen regelmäßig für diese Zwecke eingesetzt werden. Hierzu gehören anorganische Zusatzstoffe wie Borsäure, Zinkborat, Ammoniumphosphat oder Antimontrichlorid und insbesondere Antimontrioxid, die in der Regel zusammen mit organischen Halogenverbindungen benutzt werden, da hier eine synergistische Wirkungssteigerung feststellbar ist. Zu den am meisten verwendeten Halogenverbindungen gehören chlorierte und bromierte Paraffine, halogenhaltige Polymere, insbesondere Polychloropren, perchlorierte bzw. perbromierte Cykloalkane und Chlorierungs- bzw. Bromierungsprodukte von Diphenyl und Polyphenylen. Die Wirkungsweise dieser Verbindungen besteht darin, daß die Halogenverbindungen unter dem Einfluß von Hitze bzw. offenem Feuer zerfallen und Gase freisetzen , die im Zusammenwirken mit den Zersetzungsprodukten des Antimontrioxids den Zutritt von Luftsauerstoff verhindern, so daß dadurch eine Entzündung des brennbaren thermoplastischen Werkstoffes verhindert wird. Allerdings hat sich herausgestellt, daß die mit solchen Wirkstoffkombinationen ausgerüsteten Thermoplaste in der Wärmeformbeständigkeit nicht besser als im unausgerüsteten Zustand zu bewerten sind. Vor allem die chlorierten und bromierten Kohlenwasserstoffe haben einen relativ niedrigen Schmelzpunkt, so daß auch bei Abhalten offener Flammen die thermoplastischen Werkstoffe weiter abschmelzen.

Halogenfreie Flammschutzausrüstungen haben auf dem Gebiet der thermoplastischen Werkstoffe bis heute keine große Bedeutung erlangt, da die flammhemmende Wirkung von organischen Phosphorverbindungen oder Aluminiumhydroxid nur über sehr große Zugabemengen zu erreichen ist und die Zersetzungstemperatur von beispielsweise Aluminiumhydroxid für die thermoplastische Verarbeitung von hochschmelzenden Werkstoffen nicht geeignet ist.

Wenn als Flammschutzadditive halogenhaltige Verbindungen eingesetzt werden, wie dies heute in der Regel der Fall ist, so entstehen bei Einwirkung offener Flammen gesundheitsgefährdende und korrosive Zerfallsprodukte. Bei Verwendung mehrfach chlorierter Kohlenwasserstoffe entsteht u.a. Salzsäure, bei bestimmten Verbrennungstemperaturen auch in jedem Fall Dioxine. In mehrfach bromierten Kohlenwasserstoffen entstehen als Zerfallsprodukte u.a. Bromwasserstoffsäure und ebenfalls Dioxine und gegebenenfalls auch die ähnlich hochgradig toxischen substituierten Furane.

Es besteht daher ein Bedürfnis, nach flammhemmenden bzw. selbstverlöschenden Thermoplasten unter Verwendung nicht halogenhaltiger Flammschutzadditive. In dieser Richtung sind bereits zahlreiche Vorschläge gemacht worden, die aber bei der praktischen Durchführung gezeigt haben, daß die so ausgerüsteten Werkstoffe gegenüber der Ausrüstung mit halogenhaltigen Flammschutzadditiven beträchtliche Nachteile aufweisen, da die Verarbeitbarkeit meistens verschlechtert ist. Der Erfindung liegt daher die Aufgabe zugrunde, selbstverlöschend ausgerüstete Thermoplasten zu entwickeln, die den Anforderungen des Flammschutzes genügen und außerdem eine besonders hohe Wärmeformbeständigkeit aufweisen.

Zur Lösung der Aufgabe werden selbstverlöschend ausgerüstete Thermoplasten vorgeschlagen, die gekennzeichnet sind durch einen Gehalt an einer Matrix aus Styrolblockcopolymeren oder Styrol-Ethylen-Blockcopolymeren und, bezogen auf diese, 20-100% Weichmacheröle, 1-50% Polyolefine hoher Dichte und 10-200% Aluminiumhydroxid oder Magnesiumhydroxid und 10-150% eines Gemisches aus 5-60% Ammoniumpolyphosphat, 1-25% eines polymeren Hydroxyalkylderivates der Isocyanursäure und 1-25% Melamincyanurat.

Als Matrix für die Herstellung der erfindungsgemäßen möglichst elastischen Materialien werden Styrolblockcopolymere oder Styrol-Ethylen-Blockcopolymeren mit Styrolanteilen von etwa 20 - 60 Gewichtsrpozent und Olefinen eingesetzt. Besonders werden radiale Styrol-Butadien-Styrol Block-Copolymere bevorzugt. Als Weichmacheröle kommen naphthenische oder paraffinische Öle mit Dichten von 0,75 - 0,95 und Viskositäten von 30,0 - 50,0 CST/20 ° C in Mengen von etwas 20 - 100 %, bezogen auf das Gewicht der Matrix, zum Einsatz. Zur Erzielung einer möglichst hohen Wärmeformbeständigkeit wird die Kautschukmatrix mit Polymeren auf olefinischer Basis, und zwar insbesondere Polypropylen oder Polyäthylen hoher Dichte, mit Schmelzindizes von 0,1 - 30 (230 ° C/2,16 KP) in Anteilen von etwa 1 - 50 Gewichtsprozent modifiziert.

Als Flammschutzadditiv werden 10 - 200 Gewichtsprozent, bezogen auf die Kautschukmatrix, Aluminium- oder Magnesiumhydroxid und 10 - 150 Gewichtsprozent eines Gemisches aus 5 - 60 % Ammoniumpolyphosphat, 1 - 25 Gewichtsprozent Melamincyanurat und 1 - 25 % eines polymeren Hydroxyalkylderivates der Isocyanursäure zugesetzt, wobei letzteres der nachfolgenden Formel entspricht,

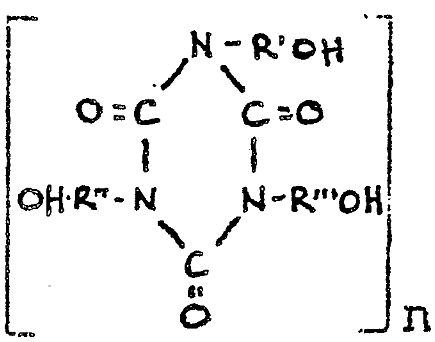

in der R′, R″ und R‴ entweder gleiche oder verschiedene Aekylgruppen mit 1 - 6 C-Atomen und n eine ganze Zahl zwischen 1 bis etwa 500 bedeuten. Verbindungen dieser Art sind beispielsweise im einzelnen in der europäischen Patentanmeldung 0 204 027 beschrieben.

Die erfindungsgemäß vorgeschlagene Polymermatrix ist in der Lage, überdurchschnittliche hohe Füllstoffmengen aufzunehmen, ohne daß die Gebrauchseigenschaften beeinträchtigt werden.

Die Kunststoffe zeichnet sich durch eine bislang nicht erreichte Wärmeformbeständigkeit aus, so daß die erfindungsgemäßen Thermoplasten alle Anforderungen der Verwendung auf dem Bau-, Elektro- und Elektroniksektor in bisher unbekannter Weise erfüllen. Die Verarbeitbarkeit derartig hochgefüllter thermoplastisch-elastomerer Massen kann durch den Einsatz speziellen Fettsäureestern, bestehend aus Fettsäuren mit Kettenlängen zwischen C12 - C20 und geradkettigen oder verzweigten Alkoholen der Kettenlängen C8 - C24 bei Zusatzmengen von etwa 0,5 - 5 Gewichtsprozent verbessert werden. Falls gewünscht, können die erfindungsgemäßen Thermoplasten weiterhin auch Boratverbindungen enthalten wie beispielsweise Calcium- und/oder Zinkborat in Anteilen von etwa 5 - 50 Gewichtsprozent, bezogen auf die Matrix. Bei dieser Kombination wird durch die Ausbildung von Boratgläsern an der Oberfläche des befeuerten Kunststoffes ein Weiterglühen verhindert.

Die flammhemmende Wirkung dererfindungsgemäßen Thermoplasten beruht darauf, daß bei Zutritt von offenem Feuer Stickstoff, Phosphoroxid und Wasserdampf aus dem Kristallwasser des Aluminiumhydroxids und Magnesiumhydroxyd dem Luftsauerstoff den Zugang zur brennbaren Polymermatrix verwehren. Die eingesetzte Wirkstoffkombination hat eine sehr niedrige Rauchgasdichte. Nach allen bisherigen Erkenntnissen sind die Zerfallsprodukte weitestgehend frei von gesundheitsgefährdenden Substanzen.

Im folgenden wird die Erfindung anhand eines Beispieles näher erläutert:

Beispiel 1

Eine typische Rezeptur für die erfindungsgemäßen Thermoplaste baut auf folgenden Bestandteilen auf:

Styrol-Butadien-Styrol-Coblockpolymer 100 Teile
parafinisches oder naphtenisches Öl 20 Teile
Polypropylen 20 Teile
Gemisch aus 5 - 60% Ammoniumpolyphosphat, 1 - 25% Melamincyanurat und 1 - 25% eines polymeren Hydroxyalkylderivates der Isocyanursäure 100 Teile
Zink- oder Calziumborat 10 Teile
Poly- $\alpha$ -methylsterol 8 Teile
Gemisch aus Fettsäureestern und fettsauren Salzen der gesättigten Fettsäuren Kettenlänge C12 - C24 5 Teile
Aluminium- oder Magnesiumhydroxyd 100 Teile
Calziumoxyd 5 Teile
üblicher Wäremstabilisator 1 Teil

Die oben genannten Komponenten werden nach gründlichem mechanischen Vermischen in üblicher Weise erwärmt und in einem Schneckenextruder weiterverarbeitet. Die hierbei gewonnene

Masse wird dann in an und für sich bekannter Weise durch die üblichen Formtechniken wie beispielsweise Spritzgießen oder Strangpressen zu Formteilen weiterverarbeitet.

## Ansprüche

1. Selbstverlöschend ausgerüstete Thermoplaste, gekennzeichnet durch einen Gehalt an einer Matrix aus einem Styrolblockcopolymeren oder Styrol-Ethylen-Blockcopolymeren und, bezogen auf diese und in Gewichtsprozent, 20 - 100% Weichmacheröle, 1 - 50% Polyolefine hoher Dichte und 10 - 200% Aluminium- oder Magnesiumhydroxid und 10-150% eines Gemisches aus 5 - 60% Ammoniumpolyphosphat, 1 - 25% Melamincyanruat und 1 - 25% eines polymeren Hydrocyalkylderivates der Isocyanursäure.

2. Selbstverlöschend ausgerüstete Thermoplaste nach Anspruch 1, gekennzeichnet durch eine Matrix aus Styrol-Olefinblockcopolymeren mit einem Gehalt an 20 - 60% Styrol.

3. Selbstverlöschend ausgerüstete Thermoplaste nach Anspruch 1 oder 2, gekennzeichnet durch eine Matrix aus Styrol-Butadien-Styrolblockcopolymeren.

4. Selbstverlöschend ausgerüstete Thermoplaste nach Anspruch 1 - 3 , gekennzeichnet durch einen Gehalt an paraffinischen oder naphtenischen Weichmacherölen mit Dichten von 0,75 - 0,95 und Viskositäten von 30,0 bis 50,0 CSTS/20° C.

5. Selbstverlöschend ausgerüstete Thermoplaste nach Anspruch 1 oder 2, gekennzeichnet durch einen Gehalt an Polypropylen oder Polyäthylen hoher Dichte mit Schmelzindizes von 0,1 - 30 (230° C/2,16 KP).

6. Selbstverlöschend ausgerüstete Thermoplaste nach Anspruch 1 oder 2, gekennzeichnet durch einen Gehalt an einem Gemisch aus Ammoniumpolyphosphat, Melamincyanurat und monomeren oder polymeren Tris(2-hydroxyäthyl)-isocyanurat.

7. Selbstverlöschend ausgerüstete Thermoplaste nach Anspruch 1 bis 6, gekennzeichnet durch einen Gehalt an Fettsäureestern aus Fettsäuren mit Kettenlängen zwischen C12 - C20 und geradkettigen oder verzweigten Alkoholen der Kettenlängen C8 - C24.

8. Selbstverlöschend ausgerüstete Thermoplaste nach Anspruch 7, gekennzeichnet durch einen Gehalt von 0,5 - 5 Gewichtsprozent Fettsäureester.

9. Selbstverlöschend ausgerüstete Thermoplaste nach Anspruch 1 bis 7, gekennzeichnet durch einen Gehalt an Calcium- und/oder Zinkborat.

10. Selbtverlöschend ausgerüstete Thermoplaste nach Anspruch 9, gekennzeichnet durch einen Boratgehalt von etwa 5 - 50 %.